# EUROPEAN PATENT APPLICATION

(11) **EP 3 007 475 A1**
(43) Date of publication of application: **13.04.2016**
(21) Application number: 14003499.2
(22) Date of filing: 10.10.2014
(51) Int. Cl.: H04W 8/24

(54) **METHOD OF PROVISIONING OF A NETWORK ACCESS FOR A MOBILE GSM COMMUNICATION DEVICE WITH LEARNING**

(71) Applicant: Giesecke & Devrient GmbH, 81677 München (DE)
(72) Inventor: Valentin, Johan, 14140 Huddinge (SE)

(57) **Abstract**

The present invention relates to a method of configuring a mobile communication device (1) to access a network service, such as an Access Point Name (APN) for Internet access, MMS APN gateway, E-mail gateway, bookmark gateway, streaming services. The method comprises the steps of

receiving an incoming traffic event for a mobile GSM communication device (10) from an Mobile Network Operator (30), the incoming traffic event comprising a TAC (Type Allocation Code) or IMEI of the mobile device (10),
checking whether the TAC/IMEI belongs to a known mobile device whose capabilities are stored in a TCR (Terminal Capability Repository) database (22),
in case the TAC belongs to a known mobile device, using the stored information to send a provisioning document over the network to the known GSM device,
in case the TAC belongs to a new mobile device, whose capabilities are not stored in the TCR (22), starting a learning phase for the new mobile device by

• sending one or more different provisioning documents over the network to the new mobile device,
• retrieving feedback on success or failure of the provisioning,
• in case of success, adding information about the capabilities of the new mobile device to the TCR (22), and
• in case of failure, sending a different provisioning document to the new mobile device.

## Description

The present invention relates to a method of provisioning of a network access for a mobile GSM communication device. The invention also relates to a system using such a method.

The Global System for Mobile Communications (GSM) is a standard for digital wireless communication with different services such as voice telephony. A mobile station (MS) comprises all user equipment and software needed for communication with the network. The mobile station (MS) comprises at least the mobile equipment (ME), which is the actual hardware, and the Subscriber Identity Module (SIM), implemented as a smart card or as an embedded universal integrated circuit card (eUICC).

The mobile equipment (ME) is uniquely identified by the International Mobile Equipment Identity (IMEI) and even more specifically by the Type Allocation Code (TAC), which represents the initial eight-digit portion of the IMEI code. The TAC is a unique code that corresponds to a specific GSM device. In the present description the terms "device", "GSM device" and "GSM communication device" are used as synonyms for the term mobile equipment (ME), i.e. the hardware part of a mobile station (MS).

Each Mobile Network Operator (MNO) strives to have as many of its mobile GSM devices as possible configured properly because the devices are owned by the MNO's customers and the MNO's income is derived from the data volume handled and thus depends critically on the ease and reliability of the provisioning of the customer's devices. Here, the term "provisioning" refers to the process of configuring a mobile GSM communication device with a minimum of user interaction, wherein the provisioning data is sent to the GSM device either on a voluntary or a force basis.

To properly provision a mobile GSM communication device, it is necessary to know
1) whether the device supports a bearer for the data transfer (an example being GPRS (General Packet Radio Service)),
2) whether the device supports at least one client provisioning protocol (an example being OMA CP, i.e. Open Mobile Alliance 1.1 Client Provisioning),
3) which settings can be provisioned, i.e. which settings are supported by the device and/ or which settings are supported by the provisioning protocol (an example of a provisionable setting being MMS), and
4) whether the device exhibits any deviation in how the client provisioning document should be formatted compared to the standard formatting (an example being a device which cannot retrieve bookmark settings in the same document as the Access Point Name (APN)),
5) in what order the provisioning protocols are to be prioritized.

Knowing items 1) to 5) for each device is costly in terms of testing, resources and quality. Presently, the MNO usually employs a team of engineers that maintains a Terminal Capability Repository (TCR), tests new devices to identify their capabilities, protocols as well as deviations of the devices and collects and stores information about the tested devices in the TCR.

To be useful, the TCR needs very accurate and up-to-date information for each device. However, at the present speed of releasing new device models in the market, keeping a TCR up to date is a difficult and time consuming task, and generally there are always some devices in the network for which the proper provisioning procedure is not known.

Complicating matters further, it is also very common that new devices appear in the market that have deviating provisioning behavior, e.g., due to newer versions of the installed software or firmware. The capabilities of the devices are thus not only device model specific but are actually device model version specific.

As mentioned, the Type Allocation Code (TAC) is able to identify a wireless device. Unfortunately, the reverse is not true. A specific device model may have multiple TACs, where the TACs may have slightly different capabilities which require different settings upon provisioning the device. Moreover, quite frequently different devices share TAC codes. In this case additional information is needed to identify the actual device, such information being the IMEI-number (International Mobile Equipment Identity) or a user agent in an HTTP-request.

A further problem arises from incorrect data entries in the TCR. Present solutions have no easy way of identifying such incorrect entries as there is no verification whether a provisioned device actually uses the provisioned settings.

The present invention intends to provide an improved method of provisioning of a network access for a mobile GSM communication device. According to one aspect of the present invention, there is provided a method as specified in claim 1. According to a further aspect, the present invention provides a system as specified in claim 6. Further advantageous features, aspects and details of the invention are evident from the dependent claims, the description and the accompanying drawing.

According to the present invention, a method of provisioning of a network access for a mobile GSM communication device comprises the steps of
R) receiving an incoming traffic event for a mobile GSM communication device from an MNO (Mobile Network Operator), the incoming traffic event comprising a TAC (Type Allocation Code) of the GSM device, preferably the traffic event also comprises at least one of the IMEI, the IMSI, the MSISDN and/or location information of the device.
C) checking whether the TAC belongs to a known GSM device whose capabilities are stored in a TCR (Terminal Capability Repository),
P1) in case the TAC belongs to a known GSM device supporting a provisioning protocol, using the stored information to send a provisioning document over the network to the known GSM device,
P2) in case the TAC belongs to a new GSM device, whose capabilities are not stored in the TCR, starting a learning phase for the new GSM device by
   L1) sending via at least one protocol one or more different provisioning documents over the network to the new GSM device,
   L2) retrieving feedback, in particular from the network, on success or failure of the provisioning,
   L3) in case of success, adding information about the capabilities of the new GSM device to the TCR, and
   L4) in case of failure, sending a different provisioning document to the new GSM device.

Preferably, in step L4) the sending of different provisioning documents to the new device is repeated until either a correct provisioning document is identified or a predefined number of unsuccessful attempts are reached. The process of sending provisioning documents terminates if ultimately no valid provisioning document is found. In this exceptional case an error message is sent to a manually operated service means. The service means is responsible for providing provisioning documents if ultimately no provisioning document can be found automatically.

When selecting provisioning documents over the network to the new GSM device, at first, the most commonly used protocol is sent. In case of failure, for instance, provisioning documents of different models of the same manufacturer or of different models of the same manufacturer in conjunction with the same MNO are used. In addition, a plurality of devices of the same type can be included in the same learning session.

According to a preferred embodiment, in step L3) the successful provisioning document, i.e. the information about the protocol, the capability, the TAC and the deviation, is stored as a standard provisioning document for this GSM device. As mentioned, the GSM devices are identified by their unique Type Allocation Code (TAC) in the TCR.

The capabilities of GSM devices stored in the TCR preferably comprise one or more of: the capability to be provisioned with APN setting, the capability to be provisioned with MMS setting, the capability to be provisioned with streaming setting, the capability to be provisioned with security mechanisms, the capability to be provisioned with data synchronization (backup), the capability to be provisioned with WiFi access points, the capability to be provisioned with email setting, the capability to be provisioned with bookmark setting, etc..

In a preferred embodiment of the invention, in step P1) a provisioning document is sent over the network to the known device using the stored information and feedback on success or failure of the provisioning. In case of failure, a different provisioning document is sent to the known device, until either a correct provisioning document is identified or a predefined number of unsuccessful attempts are reached. If a correct provisioning document has been identified, the information about the capabilities of the known device in the TCR is updated. This procedure allows verifying and updating the information stored in the TCR for known GSM devices. As the process of sending provisioning documents to a GSM device may also require accepting the provisioning documents on the device, the time span in between different attempts to send new provisioning documents may vary from seconds to days.

The present invention also includes a system for provisioning of a network access for a mobile GSM communication device and using the method described above, comprising
- means for receiving an incoming traffic event for a mobile GSM communication device from an MNO, the incoming traffic event comprising a TAC of the GSM device, preferably the traffic event also comprises at least one of the IMEI, the IMSI, the MSISDN and/ or location information of the device
- means for checking whether the TAC belongs to a GSM device whose capabilities are stored in a TCR,
- means for sending provisioning documents over the network to the GSM device,
- means for retrieving feedback, in particular from the network, on success or failure of the provisioning, and
- means for adding and preferably also updating information about the capabilities of the GSM device in the TCR.

In a preferred embodiment, the system further comprises learning means configured to
- send different provisioning documents over the network to a GSM device
- keep track of which documents have been sent to which GSM device,
- retrieve feedback, in particular from the network, on success or failure of the provisioning,
- in case of success, add or update information about the capabilities of the GSM device to the TCR, and
- in case of failure, send a different provisioning document to the GSM device.

The system thus forms a SLPS (Self Learning Provisioning Server) or a cluster of SLPSs. The system may comprise the TCR or the TCR may be an external entity with which the inventive system communicates.

During the staging process of the SLPS, an existing TCR may be used.

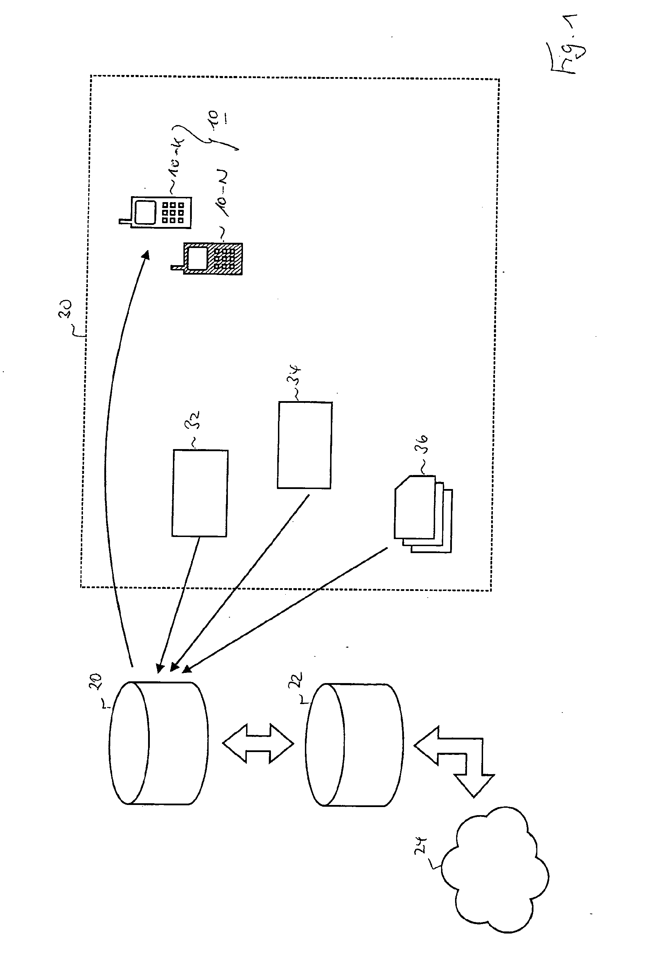

Further exemplary embodiments and advantages of the present invention are explained below by reference to the drawing, where
- Fig. 1: shows the basic components of a mobile communication system executing the method according to the present invention.

In Figure 1 the method of provisioning of a network access for mobile GSM communication devices 10 is illustrated. The provisioning takes place when a device 10 is first seen in the network and is carried out by means of a SLPS (Self Learning Provisioning Server) 20 (or a cluster of Self Learning Provisioning Servers), which receives incoming traffic events for the mobile GSM communication devices 10 from a MNO (Mobile Network Operator) 30.

Specifically, the SLPS 20 receives traffic events from the HLR (Home Location Register) 32, a central database that comprises details of each mobile phone subscriber that is authorized to use the MNO's core network, or from the Visitor Location Registry. In CDMS/LTE networks the HLR might be named differently. Feedback on device-settings is received by the SLPS 20 from the network. In particular, the feedback on device-settings is received by an APN (Access Point Name) gateway, an MMS-APN-gateway, an Email-gateway, a bookmark gateway, a streaming gateway. In another embodiment the feedback on device-settings can also be received from the device itself. Alternative means are also possible, if they are adapted to verify the settings. In addition, SIM probes 36 collect further data about the devices 10, such as a Terminal Profile or the device name, and send the further device data to the SLPS 20.

The SLPS 20 utilizes a TCR (Terminal Capability Repository) 22, which stores the capabilities of all known GSM devices 10-K. The TCR 22 in turn sends and retrieves updates to and from the global cluster 24. Feedback from many SLPS systems can thus be collected and shared via the global cluster 24. The TCR may be an external entity, as shown in Fig. 1, but may also be part of the inventive system.

In use, the SLPS 20 receives an incoming traffic event for a mobile GSM communication device 10 from the MNO 30. The incoming traffic event comprises the IMEI (International Mobile Equipment Identity) and thus the TAC (Type Allocation Code) of the GSM device 10.

Using the TAC as a key, the SLPS 20 then checks whether the TAC belongs to a GSM device whose capabilities are already stored in the TCR 22. In case the TAC belongs to a known GSM device 10-K, i.e., a device whose capabilities are already stored in the TCR 22, the stored information is used to send a provisioning document over the network to the known device 10-K.

In case the TAC belongs to a new GSM device 10-N, i.e., a device whose capabilities are not yet stored in the TCR 22, the SLPS 20 starts a learning phase for the new device 10-N. In this learning phase, initially a first provisioning document is sent over the network to the new device 10-N. The SLPS 20 then retrieves feedback from the network, i.e. in the example of Fig. 1 from an APN gateway 34, on success or failure of the provisioning. If the provisioning was successful, the information about the capabilities of the new device 10-N is added to the TCR 22. The successful provisioning document is stored as a standard provisioning document to handle future provisioning events for the GSM device 10-N, in particular to handle future provisioning events for the specific software version and firmware configuration of the GSM device 10-N.

If the feedback from the network, i.e. in the example of Fig. 1 from the APN gateway 34, is, that the first provisioning attempt has failed, a different provisioning document is sent to the new device 10-N. Again, feedback from network on success or failure of the provisioning is retrieved and, in the case of success, information about the new device 10-N is added to the TCR 22.

If necessary, the process of sending different provisioning documents to the new device 10-N is repeated until either a correct provisioning document is identified or a predefined number of unsuccessful attempts is reached.

The SLPS 20 or the SLPS cluster may create sub-categories for devices 10, depending on IMEI range, OS version or some other category. There is a large set of different capabilities of GSM devices 10 that the SLPS 20 may learn about and that may be stored in the TCR 22. Important examples include the capability to be provisioned with APN setting, the capability to be provisioned with MMS setting, the capability to be provisioned with streaming setting, the capability to be provisioned with security mechanisms, the capability to be provisioned with data synchronization (backup), the capability to be provisioned with WiFi access points, the capability to be provisioned with email setting, the capability to be provisioned with bookmark setting, etc..

The inventive SLPS 20 automatically includes new GSM device models 10-N in its database or in a database of the SLPS cluster. When a first user of a new device model 10-N is seen by the network, the learning phase for the new device 10-N is initiated. After a first successful provisioning, the device 10-N is henceforth known to the system and the capabilities of the device are stored in the TCR 22 for future reference. Because its capabilities are now stored in the TCR 22, the previously new device 10-N is a known device 10-K for subsequent users.

In an preferred embodiment of the invention, the SLPS 20 may also be used to verify and update the information stored in the TCR 22 for known devices 10-K. In this preferred embodiment, when a provisioning document is sent over the network to a known device 10-K using the information stored in the TCR 22, feedback from the network, i.e. in the example of Fig. 1 from an APN gateway 34, on success or failure of the provisioning is retrieved.

If the feedback indicates that provisioning was successful, the stored information is considered to be correct and no further action is required.

However, if the provisioning has failed, for example, due to an error in the stored information or due to a newer version of the installed software/firmware on the device 10-K, one or more different provisioning documents are sent to the known device 10-K, until either a correct provisioning document is identified or a predefined number of unsuccessful attempts is reached. Once a correct provisioning document has been identified, the information about the capabilities of the known device 10-K in the TCR 22 is updated correspondingly. In case, it is necessary to manually authorize the "new" provisioning document on the device 10-K, the time period necessary to reach the predefined number of unsuccessful attempts can vary from seconds to days.

If the provisioning has failed, the SLPS 20 selects the following provisioning document based on, for example, related devices of the same manufacturer of the device 10-K that have similar features (WIFI-, LTE-, Bluetooth-, NFC-capabilities). Alternatively the SLPS 20 selects the next provisioning document based on devices currently in use with the MNO that have similar features (WIFI-, LTE-, Bluetooth-, NFC-capabilities).

In this way, the SLPS 20 not only automatically learns about new device models, but also automatically verifies and updates existing entries in the TCR 22. The SLPS 20 can even identify subseries of IMEIs and can also keep track of different firmware/OS versions for a specific device.

## Claims

1. Method of provisioning of a network access for a mobile GSM communication device, comprising the steps of
R) receiving an incoming traffic event for a mobile GSM communication device from an MNO (Mobile Network Operator), the incoming traffic event comprising a TAC (Type Allocation Code) of the GSM device,
C) checking whether the TAC belongs to a known GSM device whose capabilities are stored in a TCR (Terminal Capability Repository),
P1) in case the TAC belongs to a known GSM device, using the stored information to send a provisioning document over the network to the known GSM device,
P2) in case the TAC belongs to a new GSM device, whose capabilities are not stored in the TCR, starting a learning phase for the new GSM device by
L1) sending one or more different provisioning documents over the network to the new GSM device,
L2) retrieving feedback on success or failure of the provisioning,
L3) in case of success, adding information about the capabilities of the new GSM device to the TCR, and
L4) in case of failure, sending a different provisioning document to the new GSM device.

2. The method according to claim 1, **characterized in that** in step L4) the sending of different provisioning documents to the new device is repeated until either a correct provisioning document is identified or a predefined number of unsuccessful attempts is reached.

3. The method according to claims 1 or 2, **characterized in that** in step L3) the added information about the capabilities of the new device comprises at least one of information on the provisioning document, the type allocation code (TAC), the used protocol, deviating capabilities of the device and the transformation needed for the device.

4. The method according to any of claims 1 to 3, **characterized in that** the capabilities of GSM devices stored in the TCR comprise one or more of: the capability to be provisioned with APN setting, the capability to be provisioned with MMS setting, the capability to be provisioned with streaming setting, the capability to be provisioned with security mechanisms, the capability to be provisioned with data synchronization (backup), the capability to be provisioned with WiFi access points, the capability to be provisioned with email setting, and/or the capability to be provisioned with bookmark setting.

5. The method according to any of claims 1 to 4, **characterized in that** in step P1) a provisioning document is sent over the network to the known device using the stored information, feedback on success or failure of the provisioning is retrieved, in case of failure, a different provisioning document is sent to the known device, until either a correct provisioning document is identified or a predefined number of unsuccessful attempts is reached, and if a correct provisioning document has been identified, the information about the capabilities of the known device in the TCR is updated.

6. The method according to any of claims 1 to 5, **characterized in that** the traffic event comprises at least one of a TAC, an IMEI, an IMSI and/or a MSISDN.

7. The method according to any of claims 1 to 6, **characterized in that** the feedback on success or failure of the provisioning is retrieved from a network, in particular from at least one of an APN (Access Point Name) gateway, an MMS-APN-gateway, an Email-gateway, a bookmark gateway.

8. System for provisioning of a network access for a mobile GSM communication device using the method of any of claims 1 to 7, comprising
- means for receiving an incoming traffic event for a mobile GSM communication device from an MNO, the incoming traffic event comprising a TAC of the GSM device,
- means for checking whether the TAC belongs to a GSM device whose capabilities are stored in a TCR,
- means for sending provisioning documents over the network to the GSM device,
- means for retrieving feedback on success or failure of the provisioning, and
- means for adding and preferably also updating information about the capabilities of the GSM device in the TCR.

9. The system according to claim 8, further comprising learning means configured to
- send different provisioning documents over the network to a GSM device
- keep track of which documents have been sent to which GSM device,
- retrieve feedback on success or failure of the provisioning,
- in case of success, add or update information about the capabilities of the GSM device to the TCR, and
- in case of failure, send a different provisioning document to the GSM device.
